# EUROPEAN PATENT SPECIFICATION

(11) **EP 2 416 175 B1**
(45) Date of publication and mention of the grant of the patent: **05.11.2014**
(21) Application number: 10758550.7
(22) Date of filing: 26.03.2010
(51) Int. Cl.: G01S 19/34, G01S 5/00, G01S 19/05

(54) **GPS TERMINAL, POSITIONING METHOD, COMMUNICATION SYSTEM, AND PROGRAM**
GPS-ENDGERÄT, POSITIONIERUNGSVERFAHREN, KOMMUNIKATIONSSYSTEM UND PROGRAMM DAFÜR
TERMINAL GPS, PROCÉDÉ DE POSITIONNEMENT, SYSTÈME DE COMMUNICATION, ET PROGRAMME

(30) Priority: 30.03.2009 JP 2009082913
(43) Date of publication of application: 08.02.2012
(73) Proprietor: NEC Corporation, Tokyo 108-8001 (JP); NTT DOCOMO, INC., Chiyoda-ku Tokyo 100-6150 (JP)
(72) Inventor: MANZEN, Yoshihisa, Tokyo 108-8001 (JP); TAKAHASHI, Makoto, Tokyo 100-6150 (JP); TSUYUKI, Syun, Tokyo 100-6150 (JP)
(74) Representative: Vossius & Partner
(86) International application number: PCT/JP2010/055320
(87) International publication number: WO 2010/113778

(56) References cited:
- WO-A1-03/005055
- JP-A- 2002 062 159
- JP-A- 2003 161 772
- JP-A- 2003 339 070
- JP-A- 2003 344 522
- JP-A- 2003 344 522
- JP-A- 2007 166 520
- JP-A- 2008 003 688

## Description

The present invention relates to a GPS (Global Positioning System) terminal, a positioning method, a communication system, and a program, and more particularly to a GPS terminal, a positioning method, a communication system, and a program that perform positioning using assist data received from a network.

Recently, the A-GPS method (Assisted GPS, also called a network assisted GPS), which utilizes the communication function of a mobile phone terminal to receive assist data from a network for implementing highly-sensitive, high-speed positioning, has become a mainstream as the GPS method for a mobile phone terminal. More specifically, the A-GPS method acquires information, such as an approximate time, an approximate position, and GPS satellite navigation data, from a network as assist data to implement positioning that has higher speed and accuracy than point positioning GPS.

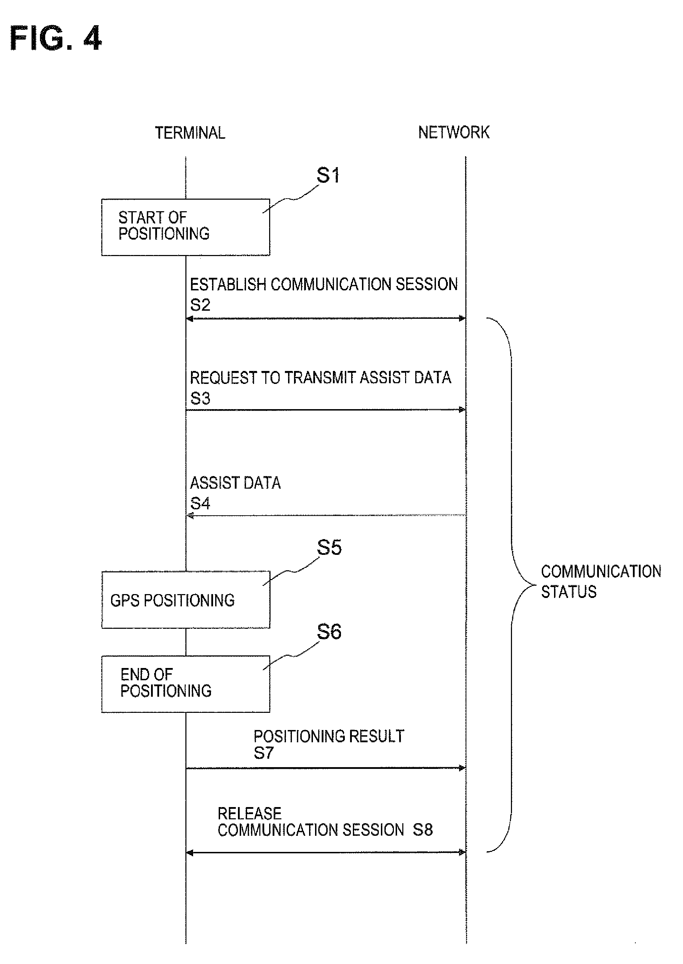

FIG. 4 is a sequence diagram showing the operation of a mobile terminal that performs positioning in the A-GPS method. As shown in FIG. 4, when a positioning start event is generated (step S1), the mobile terminal first establishes a communication session with the network (step S2). Next, the mobile terminal requests the network to transmit assist data acquires it (steps S3 and S4) and, using the assist data, performs GPS positioning (step S5). When the GPS positioning is terminated (step S6), the mobile terminal notifies the positioning result to the network side (step S7) and releases the communication session (step S8). For brevity of description, detailed message exchanges are omitted in the example in FIG. 4. The positioning result notified to the network is used, for example, for services for providing current location information on a mobile device.

JP2005-83859 A (Patent Document 1) discloses a network assisted GPS terminal that reduces the number of times the communication is carried out for obtaining approximate location information included in the assist data. According to the document, if the cell information received from the communication unit in the second or the following GPS positioning is the same as that obtained by the immediately preceding GPS positioning, the approximate location, obtained in the immediately preceding GPS positioning, is supplied to the GPS unit to reduce the number of times the approximate location is obtained from the network.

JP2005-147720 A (Patent Document 2) discloses a GPS positioning system that provides, in the network side, means for calculating and providing not only the approximate locations but the altitude information based on the actual geographical features and, based on the altitude information received from the network side, switches positioning between three-dimensional positioning and two-dimensional positioning.

Services have been expanded that utilize user's location information determined by GPS. Meanwhile, it becomes increasingly important to minimize the current consumption during GPS positioning to prolong the battery life.

For example, the method disclosed in Patent Document 1 reduces the number of times the approximate location is acquired from the network. However, from the time a communication session is established to the time the communication session is released (steps S2-S8) in FIG. 4 shown above, the need to maintain the communication state (connection state) with the network requires current consumption. For example, when a mobile terminal is moving at a high speed, the method in Patent Document 1 acquires the approximate location as before and therefore requires a large amount of power consumption.

The inventor of the present invention has found the fact that the positioning result, notified to the network side in step S7 in FIG. 4, is not necessarily used in all services and applications.

In view of the foregoing, it is an object of the present invention to provide a GPS terminal, according to claim 1, a positioning method, according to claim 5, a communication system, according to claim 8, and a program according to claim 9, for reducing current consumption at GPS positioning time to prolong the battery life. A GPS terminal using assisted GPS is known from WO 03/005055 A1.

The present invention can reduce the current consumption when a GPS terminal performs positioning and therefore prolong the battery life. The reason is that the GPS terminal is configured to release the communication session with the network without waiting for the completion of positioning by the GPS positioning unit so that the communication time (connection time) with the network is reduced.

First, the following describes the outline of the present invention.
FIG. 1 is a sequence diagram showing the operation of a GPS terminal in a first exemplary embodiment of the present invention.
FIG. 2 is a block diagram showing the configuration of the GPS terminal in the first exemplary embodiment of the present invention.
FIG. 3 is a sequence diagram showing the operation of a GPS terminal in a second exemplary embodiment of the present invention.
FIG. 4 is a diagram showing the outline of positioning in the A-GPS method.

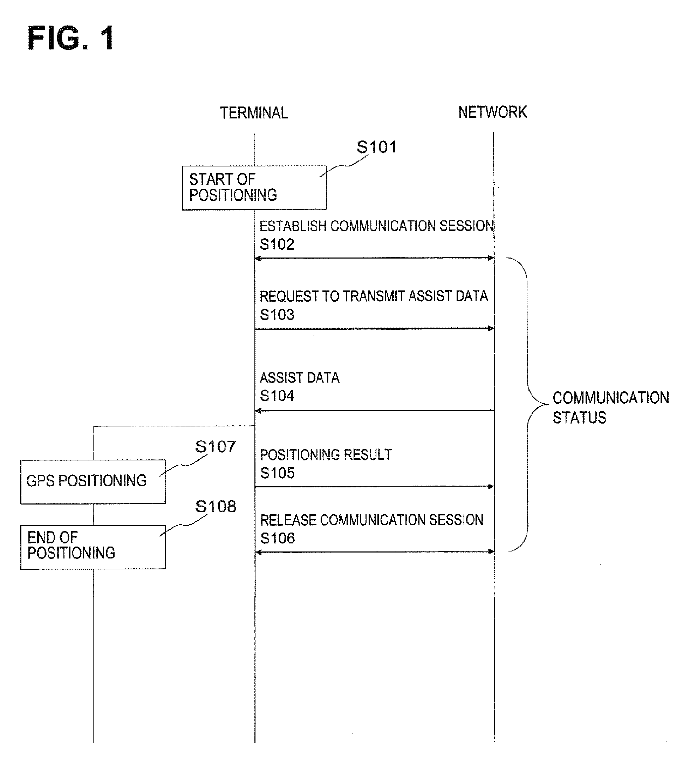

After assist data is acquired from a network (see step S104 in FIG. 1), a GPS terminal according to the present invention notifies the positioning result to the network side and releases the communication session without waiting for the termination of GPS positioning (see step S105 and step S106 in FIG. 1). This method reduces the communication time with the network and reduces the current consumption.

After the communication session is released, GPS positioning is performed as described above. The present invention performs GPS positioning using assist data similarly as in the conventional method and therefore produces the result with no effect on positioning accuracy.

### [First exemplary embodiment]

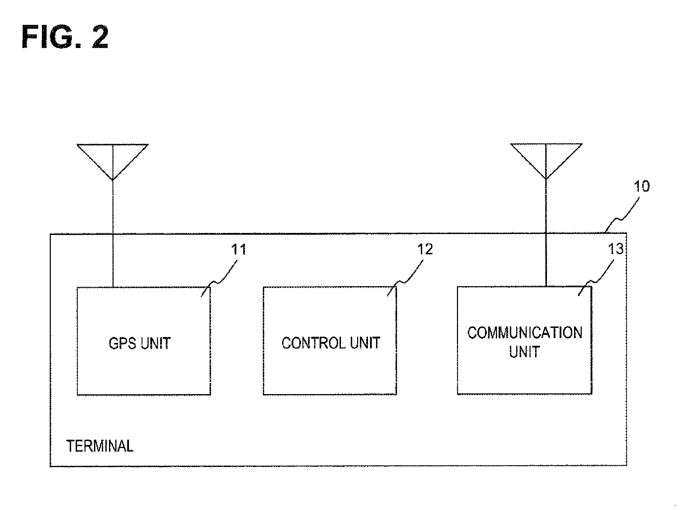

Next, the following describes preferred exemplary embodiments of the present invention more in detail with reference to the drawings. FIG. 2 is a block diagram showing the configuration of a GPS terminal in a first exemplary embodiment of the present invention. Referring to FIG. 2, the (GPS) terminal 10 comprises a GPS unit 11, a control unit 12, and a communication unit 13.

The GPS unit 11 uses assist data, acquired by the communication unit 13, to receive the GPS signal received from a GPS satellite. The GPS unit 11 comprises a module(s) such as a GPS module for outputting the positioning result.

The control unit 12 comprises a CPU (Central Processing Unit) that controls the components of the (GPS) terminal 10 such as the GPS unit 11 and the communication unit 13. More specifically, the control unit 12 supplies assist data, received from the network via the communication unit 13, to the GPS unit 11 to cause the GPS unit 11 to perform positioning and, in addition, controls the communication unit 13 to request the network side to transmit assist data and to notify the positioning result (release the session). The processing performed by the control unit 12 is implemented by a program(s) executed by the CPU that configures the control unit.

The communication unit 13, which is configured by a transmission/reception unit that modulates/demodulates data received via the antenna and a communication control unit that controls communication, carries out radio communication with the network and acquires assist data. More specifically, the communication unit 13 carries out radio communication with the nearest radio base station to register the position in the network and acquires assist data from an assist server installed on the network side.

Next, the following describes the operation of this exemplary embodiment more in detail with reference to the drawings. FIG. 1 is a sequence diagram showing the operation of the GPS terminal in the first exemplary embodiment of the present invention. Referring to FIG. 1, when a positioning start event is generated, for example, when a particular service-usage start operation is performed (step S101), the (GPS) terminal 10 establishes a communication session with the network (step S102) and then requests the network to transmit assist data (step S103).

When assist data is acquired from the network side (step S104), the (GPS) terminal 10 immediately notifies the positioning result to the network side (step S105) and releases the communication session (step S106).

The positioning result notified to the network side in step S105 described above may be a dummy positioning result or the initial position included in the assist data acquired previously from the network. That is, the positioning result may be created without using the positioning result generated by performing GPS positioning using the assist data acquired in step S104; in other words, the positioning result may be any data that acts as the notification means for releasing the communication session normally.

As a result, though the accurate GPS positioning result created using the assist data is not notified to the network side, there is no problem with services or applications that basically do not have to notify the positioning result to the network side. If the GPS positioning result, created using the assist data, is obtained in the GPS positioning that has already been performed, the most recent GPS positioning result may be transmitted.

In parallel with the above-described notification of the positioning result to the network side, the (GPS) terminal 10 performs GPS positioning using the assist data (step S107) and terminates the GPS positioning (step S108).

As described above, a session (i.e., a communication status with network) is released (terminated) in this exemplary embodiment as soon as possible after assist data is acquired without waiting for the completion of GPS positioning. As compared with the method shown in FIG. 4 in which a session is released after GPS positioning is completed, the method in this exemplary embodiment reduces the communication time (connection time) with the network side and reduces the current consumption at GPS positioning time. In addition, as compared with the method shown in FIG. 4, the method in this exemplary embodiment, which starts GPS positioning immediately after assist data is acquired, prevents the time required for GPS positioning from being increased.

### [Second exemplary embodiment]

Next, the following describes a second exemplary embodiment of the present invention created by adding changes to the first exemplary embodiment of the present invention described above. Because the second exemplary embodiment may be implemented by a (GPS) terminal having a configuration similar to that of the (GPS) terminal in the first exemplary embodiment described above, the following describes the operational difference between the two exemplary embodiments.

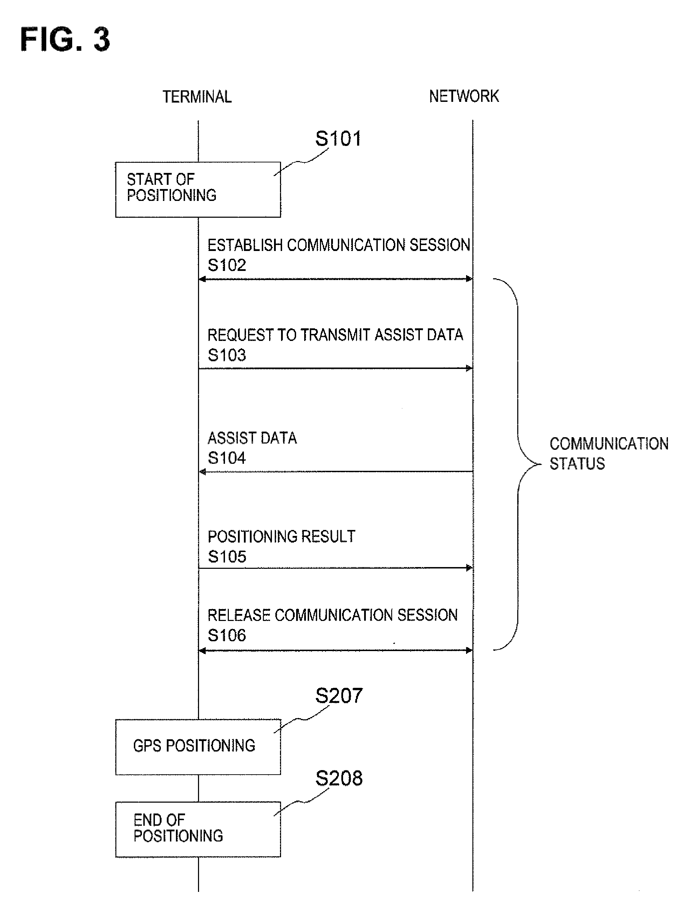

FIG. 3 is a sequence diagram showing the operation of a GPS terminal in the second exemplary embodiment of the present invention. The operation from the start of positioning (step S101) to the release of the communication section (step S106) in FIG. 3 is the same as that in the first exemplary embodiment described above and, therefore, the same numeral is used for the same operation step and its description is omitted.

When the release of the communication session is completed (step S106), the (GPS) terminal 10 performs GPS positioning using the assist data (step S207) and then terminates the GPS positioning (step S208).

As described above, positioning result notification (release of session) and GPS positioning are not performed in parallel after acquiring the assist data; instead, GPS positioning is performed after the positioning result is notified and the session is released. This method also reduces the communication time (connection time) with the network side and reduces the current consumption at GPS positioning time.

While the exemplary embodiments of the present invention have been described, it is to be understood that the present invention is not limited to the exemplary embodiments above and that changes, replacements, and adjustments may be added without departing from the basic technological concept of the present invention. For example, though the description is omitted in the above exemplary embodiments, a method such as the one described in Patent Document 1 is also possible in which assist data is held and, when there is no change in the approximate position, the request to transmit assist data is not issued. The exemplary embodiments of the present invention, if combined with such a method, further reduce the current consumption.

The present invention is applicable not only to a mobile phone terminal with the GPS function but to a PDA(Personal Digital Assistant) with the communication function and the GPS function and to a vehicle-mounted GPS terminal with the function to coordinate with a mobile phone terminal.

## Claims

1. A GPS terminal, comprising:
a communication unit that receives assist data from a network, the assist data used for positioning via GPS(Global Positioning System); and
a GPS positioning unit that receives a GPS signal and outputs a positioning result created by using the assist data, wherein
in a case where it is not necessary to notify the positioning result to the network, a communication session with the network is released without waiting for said GPS positioning unit to complete positioning, whereby after receiving assist data from the network side, the terminal is configured to return a positioning result, created without using the assist data, as a response.

2. The GPS terminal as defined by claim 1, wherein
after assist data is received from the network side, a positioning result, created without using the assist data, is returned as a response.

3. The GPS terminal as defined by claim 1 or 2, wherein
the positioning by said GPS positioning unit is started after a release of the communication session is completed.

4. The GPS terminal as defined by claim 1 or 2, wherein
the return of the response of the positioning result created without using the assist data and the positioning by said GPS positioning unit are performed in parallel.

5. A positioning method comprising the steps of:
receiving assist data from a network, the assist data used for positioning via Global Positioning System GPS;
in a case where it is not necessary to notify the positioning result to the network, after receiving assist data from the network side, returning a positioning result, created without using the assist data, as a response; and
receiving a GPS signal and outputting a positioning result created by using the assist data.

6. The positioning method as defined by claim 5, further comprising a step of:
after a release of the communication session is completed, starting positioning by a GPS positioning unit.

7. The positioning method as defined by claim 5, wherein
the returning of the response of the positioning result created without using the assist data and positioning by a GPS positioning unit are performed in parallel.

8. A communication system, comprising the GPS terminal as defined by any one of claims 1-4 and an assist server that transmits assist data to said GPS terminal.

9. A program causing a computer, installed in a GPS terminal, to perform:
processing of receiving assist data from a network, the assist data used for positioning via Global Positioning System GPS;
in a case where it is not necessary to notify the positioning result to the network, after receiving assist data from the network side, processing of returning a positioning result, created without using the assist data, as a response; and
processing of receiving a GPS signal and outputting a positioning result created by using the assist data.

10. The GPS terminal as defined by one of claims 2-4, wherein, as a positioning result created without using the assist data, one of a dummy positioning result, initial position data included in assist data acquired from the network before, and a result of positioning already performed is used

## Patentansprüche

1. GPS-Endgerät mit:
einer Kommunikationseinheit, die Unterstützungsdaten aus einem Netzwerk empfängt, wobei die Unterstützungsdaten zum Positionieren über GPS (Global Positioning System) verwendet werden, und
einer GPS-Positionseinheit, die ein GPS-Signal empfängt und ein Positionsergebnis ausgibt, das unter Verwendung der Unterstützungsdaten erzeugt wurde,
wobei dann, wenn es nicht erforderlich ist, das Positionsergebnis an das Netzwerk zu melden, eine Kommunikationssitzung mit dem Netzwerk freigegeben wird ohne abzuwarten, bis die GPS-Positionseinheit die Positionierung abgeschlossen hat,
wobei das Endgerät dafür eingerichtet ist, nach dem Empfang von Unterstützungsdaten von der Netzwerkseite her als Antwort ein Positionsergebnis zurückzugeben, das ohne Verwendung der Unterstützungsdaten erzeugt wurde.

2. GPS-Endgerät nach Anspruch 1, wobei nach dem Empfang von Unterstützungsdaten von der Netzwerkseite ein Positionsergebnis, das ohne Verwendung der Unterstützungsdaten erzeugt wurde, als Antwort zurückgegeben wird.

3. GPS-Endgerät nach Anspruch 1 oder 2, wobei die Positionierung durch die GPS-Positionseinheit gestartet wird nachdem die Freigabe der Kommunikationssitzung abgeschlossen ist.

4. GPS-Endgerät nach Anspruch 1 oder 2, wobei die Rückführung der Antwort des Positionsergebnisses, das ohne Verwendung der Unterstützungsdaten erzeugt wurde, und die Positionierung durch die GPS-Positionseinheit parallel ausgeführt werden.

5. Positionierungsverfahren mit den Schritten:
Empfangen von Unterstützungsdaten von einem Netzwerk, wobei die Unterstützungsdaten zum Positionieren über das Global Positioning System GPS verwendet werden,
Rückführen eines Positionsergebnisses als Antwort, das ohne Verwendung der Unterstützungsdaten erzeugt wurde, wenn es nicht erforderlich ist, das Positionsergebnis an das Netzwerk zu melden nach dem Empfangen von Unterstützungsdaten von der Netzwerkseite, und
Empfangen eines GPS-Signals und Ausgeben eines Positionsergebnisses, das unter Verwendung der Unterstützungsdaten erzeugt wurde.

6. Positionierungsverfahren nach Anspruch 5, ferner mit einem Schritt:
Starten der Positionierung durch eine GPS-Positionseinheit nach Abschluss einer Freigabe der Kommunikationssitzung.

7. Positionierungsverfahren nach Anspruch 5, wobei die Rückgabe der Antwort des Positionsergebnisses, das ohne die Unterstützungsdaten erzeugt wurde, und das Positionieren durch eine GPS-Positionseinheit parallel ausgeführt werden.

8. Kommunikationssystem mit dem GPS-Endgerät nach einem der Ansprüche 1 bis 4 und einem Unterstützungs-Server, der Unterstützungsdaten an das GPS-Endgerät sendet.

9. Programm, das einen in einem GPS-Endgerät installierten Computer veranlasst, folgendes auszuführen:
Verarbeiten von empfangenen Unterstützungsdaten von einem Netzwerk, wobei die Unterstützungsdaten zum Positionieren über ein Global Positioning System GPS verwendet werden,
Verarbeiten der Rückführung eines Positionsergebnisses, das ohne Verwendung der Unterstützungsdaten erzeugt wurde, als eine Antwort, wenn es nicht erforderlich ist, das Positionsergebnis an das Netzwerk zu melden nach dem Empfang von Unterstützungsdaten von der Netzwerkseite, und
Bearbeiten des Empfangs eines GPS-Signals und Ausgeben eines unter Verwendung der Unterstützungsdaten erzeugten Positionsergebnisses.

10. GPS-Endgerät nach einem der Ansprüche 2 bis 4, wobei als ein ohne Verwendung der Unterstützungsdaten erzeugtes Positionsergebnis eines der folgenden Ergebnisse verwendet wird: ein Pseudo-Positionsergebnis, Anfangspositionsdaten, die in von dem Netzwerk vorher erhaltenen Unterstützungsdaten enthalten sind, und ein bereits ausgeführtes Positionsergebnis.

## Revendications

1. Terminal GPS comprenant :
une unité de communication qui reçoit des données d'assistance à partir d'un réseau, les données d'assistance étant utilisées pour la localisation via GPS (système de localisation mondiale) ; et
une unité de localisation GPS qui reçoit un signal GPS et délivre en sortie un résultat de localisation créé en utilisant les données d'assistance, dans lequel
dans un cas où il n'est pas nécessaire de notifier le résultat de localisation au réseau, une session de communication avec le réseau est libérée sans attendre que ladite unité de localisation GPS termine la localisation,
moyennant quoi, après réception de données d'assistance en provenance du côté réseau, le terminal est configuré pour renvoyer comme réponse un résultat de localisation créé sans utiliser les données d'assistance.

2. Terminal GPS selon la revendication 1, dans lequel, après que les données d'assistance sont reçues en provenance du côté réseau, un résultat de localisation, créé sans utiliser les données d'assistance, est renvoyé comme réponse.

3. Terminal GPS selon la revendication 1 ou 2, dans lequel
la localisation par ladite unité de localisation GPS est commencée après qu'une libération de la session de communication est terminée.

4. Terminal GPS selon la revendication 1 ou 2, dans lequel
le renvoi de la réponse du résultat de localisation créé sans utiliser les données d'assistance et la localisation par ladite unité de localisation GPS sont effectués en parallèle.

5. Procédé de localisation comprenant les étapes suivantes :
la réception de données d'assistance à partir d'un réseau, les données d'assistance étant utilisées pour la localisation via un système de localisation mondiale GPS ;
dans un cas où il n'est pas nécessaire de notifier le résultat de localisation au réseau, après réception de données d'assistance en provenance du côté réseau, le renvoi comme réponse d'un résultat de localisation créé sans utiliser les données d'assistance ; et
la réception d'un signal GPS et la fourniture en sortie d'un résultat de localisation créé en utilisant les données d'assistance.

6. Procédé de localisation selon la revendication 5, comprenant en outre l'étape suivante :
après qu'une libération de la session de communication est terminée, le démarrage d'une localisation par une unité de localisation GPS.

7. Procédé de localisation selon la revendication 5, dans lequel
le renvoi de la réponse du résultat de localisation créé sans utiliser les données d'assistance et la localisation par une unité de localisation GPS sont effectués en parallèle.

8. Système de communication, comprenant un terminal GPS selon l'une quelconque des revendications 1 à 4 et un serveur d'assistance qui transmet des données d'assistance audit terminal GPS.

9. Programme forçant un ordinateur, installé dans un terminal GPS, à effectuer :
le traitement de la réception de données d'assistance à partir d'un réseau, les données d'assistance étant utilisées pour la localisation via un système de localisation mondiale GPS ;
dans un cas où il n'est pas nécessaire de notifier le résultat de localisation au réseau, après réception de données d'assistance en provenance du côté réseau, le traitement du renvoi comme réponse d'un résultat de localisation créé sans utiliser les données d'assistance ; et
le traitement de la réception d'un signal GPS et de la fourniture en sortie d'un résultat de localisation créé en utilisant les données d'assistance.

10. Terminal GPS selon une des revendications 2 à 4, dans lequel, comme résultat de localisation créé sans utiliser les données d'assistance, un parmi un résultat de localisation factice, des données de position initiale comprises dans les données d'assistance acquises auparavant à partir du réseau et un résultat de localisation déjà effectuée, est utilisé.
